# EUROPEAN PATENT APPLICATION

(11) **EP 3 588 326 A1**
(43) Date of publication of application: **01.01.2020**
(21) Application number: 18386019.6
(22) Date of filing: 26.06.2018
(51) Int. Cl.: G06F 17/11, G06Q 10/04, G06N 99/00

(54) **SOLVING A DETERMINISTIC GLOBAL OPTIMISATION PROBLEM**

(71) Applicant: Octeract Limited, London WC1N 3AX (GB)
(72) Inventor: Kazazakis, Nikolaos, London, E14 9DL (GB); Lau, Gabriel, London, E16 3DZ (GB)

(57) **Abstract**

A computer implemented method for solving a Deterministic Global Optimisation (DGO) problem is provided. The method involves defining an input optimisation problem based on the DGO problem. An Al machine 201 then generates an updated configuration of an algorithm for solving the input optimisation problem, the updated configuration comprising a plurality of tasks. Generation of the updated configuration is based on metadata. The Al machine 203 distributes the plurality of tasks to different processing units of a DGO engine 203 for processing, based on the updated configuration. The results of the processing and metadata representing information about the processing are received by the Al machine 201 from the DGO engine 203, and, until it is proven that a global solution to the DGO problem has been found within a user-defined tolerance, the configuration of the algorithm is further updated using the received metadata and the processing is repeated.

## Description

### Field of the Disclosure

This disclosure relates to solving a Deterministic Global Optimisation (DGO) problem. In particular, but not exclusively, it relates to a computer implemented method for solving a DGO problem, an apparatus for solving a DGO problem and to a computer program comprising instructions for performing the method. The disclosure is especially applicable to large-scale DGO problems.

### Background

Solving an optimisation problem involves finding an optimum solution, which could be a vector minimising or maximising the values of one or more functions subject to a set of constraints. Finding solutions to optimisation problems is important in many fields, including operational research and logistics, where the solution to an optimisation problem may be used to make a decision in industry.

One example of an optimisation problem which is important in the industry is the "travelling salesman problem". The travelling salesman problem asks, "given a list of locations and distances between each pair of locations, what is the shortest possible route that visits each location and returns to the original location?" Being able to find a solution to this problem is particularly important in industries such as haulage, where minimising the distance travelled by a delivery driver can minimise the costs for fuel expended. The travelling salesman problem has been studied extensively, and a large number of heuristics are known that provide locally optimal solutions to non-linear variations of the problem. However, these do not locate a global solution and there is generally no known way to locate a global solution consistently for such complex optimisation problems.

One example of a complex optimisation problem is a non-linear problem, where at least one of the variables of the problem appears in a general non-linear mathematical structure at least once in the optimisation problem. The term "general" here means that the forms of non-linearity that appear in the optimisation problem do not necessarily have a mathematical structure which can be considered special from an algorithmic or mathematical perspective. That is, these optimisation problems are of arbitrary non-linear structure. A further example of a more complex optimisation problem is a mixed integer problem, where some variables are constrained to be integer values at the solution.

It is desired to locate a global solution to these complex optimisation problems, if one exists, or to prove that no feasible solution exists. It is important to be able to guarantee that the reported solution is indeed a global one, within some predefined tolerance. This type of problem is referred to as Deterministic Global Optimisation (DGO) problem.

A type of DGO problem that is more complex still is a large-scale DGO problem. In a large-scale DGO problem, the input problem contains more than 300 non-linear variables. In some examples, it has thousands of linear variables as well. In some examples, the large-scale DGO problem may also be a mixed integer problem.

One major problem with current methods is that the functional forms of the DGO problem may be so convoluted that the problem is unsolvable in reasonable time, and certainly not within the span of a person's career. In fact, the actual time to solve a large-scale DGO problem using current methods can be tens of thousands of years or more.

Large-scale DGO problems are difficult to solve because there is no known singular algorithm, or combination of algorithms, which can solve any type of large-scale DGO problem in reasonable time. It is also extremely unlikely that such an algorithm will ever be discovered because there are an infinite number of possible non-linear structures.

### Summary of the Disclosure

Aspects of the invention provided by the disclosure are defined in the accompanying claims.

In one aspect of a particular embodiment, there is provided a computer implemented method for solving a Deterministic Global Optimisation, DGO, problem, the method comprising: defining an input optimisation problem based on the DGO problem; performing a routine comprising: generating an updated configuration of an algorithm for solving the input optimisation problem, the updated configuration comprising a plurality of tasks and the generation of the updated configuration being based on metadata; distributing the plurality of tasks of the updated configuration to different processing units for processing, the distribution being based on the updated configuration; receiving results of the processing of the plurality of tasks from the different processing units; and receiving metadata representing information about the processing of the plurality of tasks by the different processing units; and, until it is proven that a global solution to the DGO problem has been found, updating the metadata using the received metadata and repeating the routine.

In another aspect, there is provided an apparatus for solving a Deterministic Global Optimisation, DGO, problem, the apparatus comprising a computer processing means arranged to: define an input optimisation problem based on the DGO problem; perform a routine comprising: generating an updated configuration of an algorithm for solving the input optimisation problem, the updated configuration comprising a plurality of tasks and the generation of the updated configuration being based on metadata; distributing the plurality of tasks of the updated configuration to different processing units for processing, the distribution being based on the updated configuration; receiving results of the processing of the plurality of tasks from the different processing units; and receiving metadata representing information about the processing of the plurality of tasks by the different processing units; and, until it is proven that a global solution to the DGO problem has been found, adding the received metadata to the metadata and repeating the routine.

Optionally, the metadata includes information derived from previously performing the method to solve a different DGO problem.

The generating and/or the distributing may use a machine learning algorithm.

Typically, the generating of the updated configuration of the algorithm when the routine is repeated is also based on the results, e.g. the results of each task.

The received metadata may relate to at least one of: the cost of processing each task and the quality of each result.

Optionally, the metadata relating to the cost of processing each task is: a) indicative of a length of time between sending the task to the processing unit and receiving the result from the processing unit and/or b) indicative of whether any aspect of the processing of the task is likely to be reuseable when processing another task.

Similarly, the quality data is optionally: a) indicative of an amount by which a bound of a variable of the input problem is tightened, b) indicative of amounts by which bounds of a plurality of variables of the input problem are tightened, c) indicative of bounds on the values of a plurality of functions or optimisation problems.

Generating the plurality of tasks typically comprises selecting one or more algorithms from a library of algorithms.

Distributing the plurality of tasks among the different processing units for processing usually involves defining operations based on the tasks, which operations each perform: a single task, a plurality of the tasks or a part of one of the tasks. The distribution of the tasks between the processing units preferably minimises the total time taken to process said plurality of tasks. Additionally or alternatively, the distribution of the tasks between the processing units preferably minimises the cost of computational resources.

At least one of the plurality of tasks may be stored and made use of in generating the updated configuration of the algorithm when the routine is repeated.

The DGO problem is typically a large-scale DGO problem.

Any feature in one aspect of the disclosure may be applied to other aspects of the disclosure, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure also provides a computer program and a computer program product comprising software code adapted, when executed on a data processing apparatus, to perform any of the methods described herein, including any or all of their component steps.

The disclosure also provides a computer program and a computer program product comprising software code which, when executed on a data processing apparatus, comprises any of the apparatus features described herein.

The disclosure also provides a computer program and a computer program product having an operating system which supports a computer program for carrying out any of the methods described herein and/or for embodying any of the apparatus features described herein.

The disclosure also provides a computer readable medium having stored thereon the computer program as aforesaid.

The disclosure also provides a signal carrying the computer program as aforesaid, and a method of transmitting such a signal.

The disclosure extends to methods and/or apparatus substantially as herein described with reference to the accompanying drawings.

Embodiments of the disclosure will now be described, by way of example only, with reference to the accompanying drawings.

### Brief Description of the Drawings

Figure 1 is a flow chart illustrating a procedure for solving a DGO problem according to the prior art.
Figure 2 is a schematic illustration of an embodiment of an apparatus according to the disclosure.
Figure 3 is a schematic illustration of an AI machine of the apparatus.
Figure 4 is a flowchart of a method of solving a DGO problem according to the disclosure.

### Detailed Description

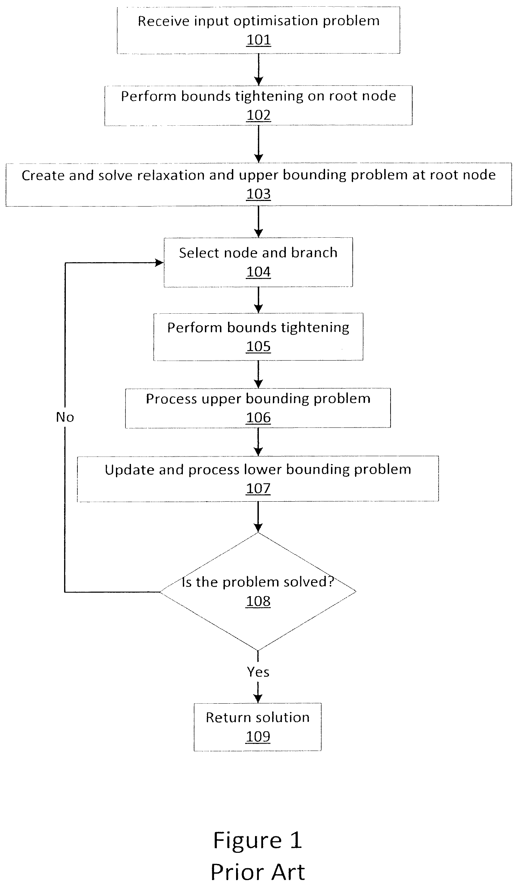

Referring to Figure 1, a prior art procedure for solving a DGO problem involves, at step 101, receiving an input optimisation problem based on the DGO problem to be solved. At step 102, bounds tightening is performed on a root node of the input optimisation problem, the root node being an original domain of a function defining the input optimisation problem. At step 103, a relaxation of the function is created, and upper bounds are generated. In this example, the input optimisation problem is a minimisation problem, hence upper bounds are generated. In other examples, the input optimisation problem may be a maximisation problem, and lower bounds are instead generated.

At step 104, the original domain of the function is split, creating any number of additional nodes. The additional nodes each define a new domain. The additional nodes are called branches in a branch-and-bound tree. At step 105, a bounds tightening method is performed at a selected node. At step 106, an upper bounding problem is processed and the upper bounds of the function are generated. At step 107, a lower bounding problem is updated based on the upper bounds, the lower bounding problem is processed and the lower bounds on the optimisation problem are generated over the selected node. At step 108, if the input optimisation problem is solved by the preceding actions, then a solution is returned, at step 109. If the input optimisation problem is not solved, then the procedure returns to step 104, and a node is selected in the branch-and-bound tree for further bounds tightening.

The prior art procedure is performed by a computer under the control of a human user. The human user chooses particular methods of bounds tightening and selecting nodes, and programs the computer to perform the chosen methods. However, there is no set approach for choosing the most appropriate methods. Moreover, a large number of methods of producing relaxations, performing bounds tightening and selecting nodes are available for the human to choose from, and many of these methods may be unsuccessful in helping to solve the DGO problem. This can lead to significant inefficiencies and wasted processing time. Indeed, the complexity is such that it is effectively impossible for the prior art procedure to be successful in solving a general large-scale DGO problem, as well as many small general DGO problems.

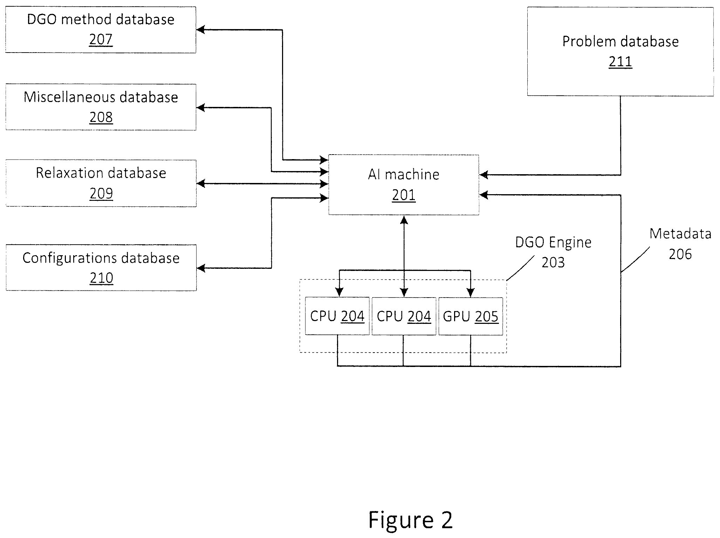

Referring to Figure 2, an apparatus for solving a DGO problem according to the disclosure comprises an Artificial Intelligence (AI) machine 201 arranged to implement a DGO algorithm. The DGO algorithm should not be confused with the methods of the prior art used to perform bounds tightening at a single node. Rather, the DGO algorithm of the disclosure performs the entire process of solving the DGO problem.

The AI machine 201 is in communication with a DGO engine 203. The DGO engine 203 is responsible for solving the DGO problem using configurations of the DGO algorithm, which configurations are generated by the AI machine 201.

The DGO engine 203 comprises multiple processing units. In the illustrated embodiment, there are two Central Processing Units (CPUs) 204 and one Graphical Processing Unit (GPU) 205. However, in most embodiments of the apparatus the DGO engine 203 comprises a larger number of processing units, which can be CPUs, GPUs or any other means of processing data. The DGO engine 203 uses the processing units to perform tasks.

The AI machine 201 makes decisions as to how to distribute tasks amongst the processing units of the DGO engine 203. The AI machine 201 is also arranged to send the tasks to the processing units for processing. The processing units are arranged to perform the tasks required by the AI machine 201 and to send the results back to the AI machine 201. This exchange of information is shown by the double-headed arrow between the AI machine 201 and the DGO engine 203.

The DGO engine 203 is arranged to collect metadata during the process of solving the DGO problem. In particular, the DGO Engine 203 is arranged to collect metadata based on how the processing units process the tasks. The metadata relates, amongst other things, to the quality of the results of the tasks, as well as the computational cost involved in processing the tasks. The DGO engine 203 is arranged to feed the metadata back to the AI machine 201, as indicated by arrow 206 in Figure 2, to provide a resource that the AI machine 201 can use to make decisions.

In this embodiment, the apparatus also comprises a DGO method database 207, a miscellaneous database 208, a relaxation database 209, a configurations database 210 and a problem database 211.

The DGO method database 207 is arranged to store DGO methods that are used during the process of solving the DGO problem.

The miscellaneous database 208 is arranged to store the metadata along with additional methods that are used during the process of solving the DGO problem. The additional methods include load balancing heuristics, interval arithmetic methods and local optimisation methods.

The relaxation database 209 is arranged to store a library of relaxation algorithms which can be used to build approximations of an input optimisation problem.

The configurations database 210 is arranged to store configurations of the DGO algorithm. The configurations typically match a mathematical structure of an aspect of the DGO problem to settings for the DGO engine 203 that are known to result in the DGO engine 203 performing efficiently for that mathematical structure.

The problem database 211 contains a library of DGO problems. The DGO problems typically include DGO problems that have previously been solved, and that may be used to inform decision making by the AI machine 201, as well as DGO problems that are still to be solved using the AI machine 201. The problem database 211 typically also stores optimisation problems that form part of DGO problems, which optimisation problems may have been solved or are yet to be solved.

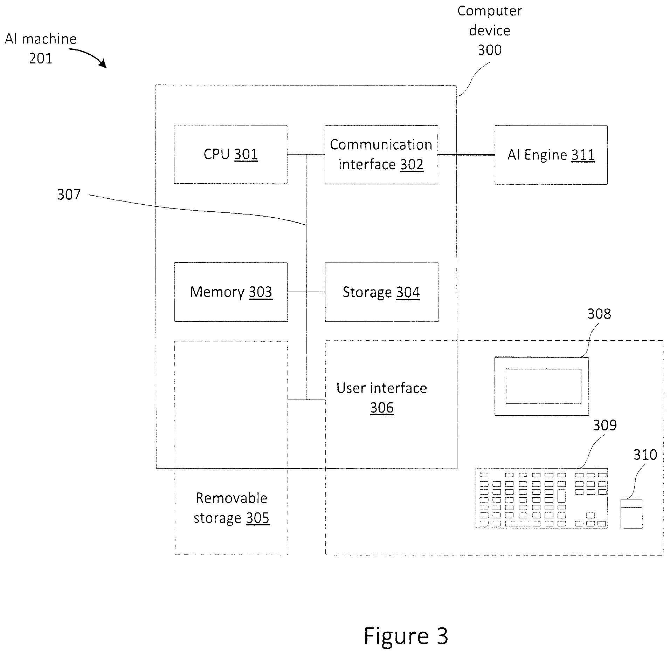

Referring to Figure 3, the AI machine 201 is implemented using a computer device 300. The computer device 300 comprises a processor in the form of a CPU 301, a communication interface 302, a memory 303, storage 304, removable storage 305 and a user interface 306 coupled to one another by a bus 307. The user interface 306 comprises a display 308 and an input/output device, which in this embodiment is a keyboard 309 and a mouse 310.

The CPU 301 executes instructions, including instructions stored in the memory 303, the storage 304 and/or removable storage 310. In the illustrated embodiment, just one CPU 301 is present. However, in many embodiments, multiple processing units are present, including CPUs, GPUs or other types of processing units.

The communication interface 302 is typically an Ethernet network adaptor coupling the bus 307 to an Ethernet socket. The Ethernet socket is coupled to a network. The network is typically a Local Area Network (LAN).

The memory 303 stores instructions and other information for use by the CPU 301. The memory 303 is the main memory of the computer device 300. It usually comprises both Random Access Memory (RAM) and Read Only Memory (ROM).

The storage 304 provides mass storage for the computer device 300. In different implementations, the storage 304 is an integral storage device in the form of a hard disk device, a flash memory or some other similar solid state memory device, or an array of such devices.

The removable storage 305 provides auxiliary storage for the computer device 300. In different implementations, the removable storage 305 is a storage medium for a removable storage device, such as an optical disk, for example a Digital Versatile Disk (DVD), a portable flash drive or some other similar portable solid state memory device, or an array of such devices. In other embodiments, the removable storage 305 is remote from the computer device 300, and comprises a network storage device or a cloud-based storage device.

The computer device 300 on which the AI machine 201 is implemented may be optimised to perform the large amount of processing required by the disclosed method. However, in the illustrated embodiment, the computer device 300 is in communication with an AI engine 311. Specifically, the communication interface 302 of the computer device 300 is coupled to the AI engine 311 via the LAN. In this embodiment, the AI engine 311 is located remote from the computer device 300, and the LAN is coupled to the AI engine 311 via the Internet. The AI engine 311 is optimised for performing the processing required to implement the disclosed method, under the control of the computer device 300.

A computer program product is provided that includes instructions for carrying out aspects of the method(s) described below. The computer program product is stored, at different stages, in any one of the memory 303, storage device 304, removable storage 305. The storage of the computer program product is non-transitory, except when instructions included in the computer program product are being executed by the CPU 302 or the AI engine 311, in which case the instructions are sometimes stored temporarily in the CPU 301, memory 303 or AI engine 311. It should also be noted that the removable storage 304 is removable from the computer device 300, such that the computer program product is held separately from the computer device 300 from time to time.

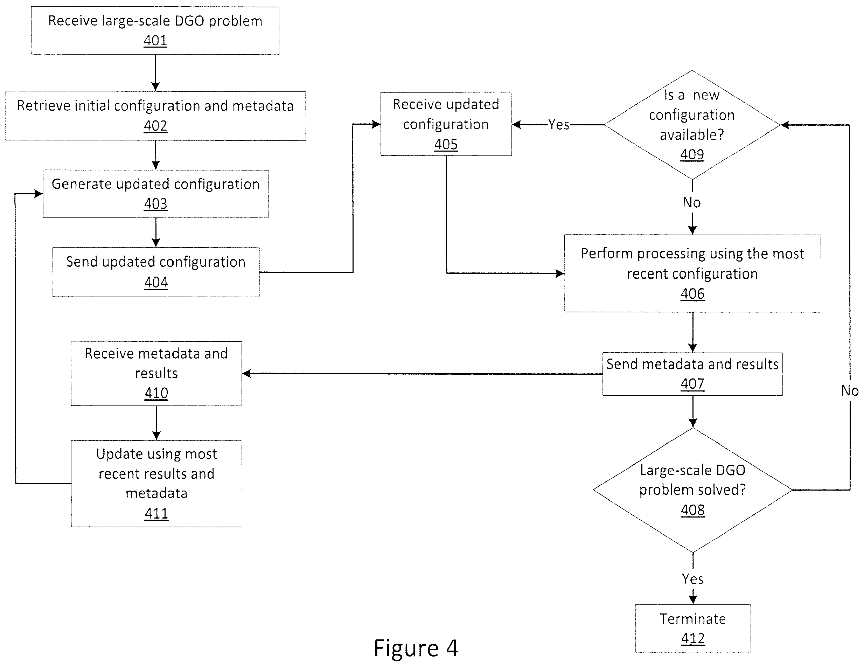

Referring to Figure 4, a method of solving the DGO problem comprises, at step 401, receiving the DGO problem from the problem database 211. At step 402, an initial configuration for the DGO algorithm is retrieved from the configuration database 210, along with initial metadata from the miscellaneous database 208. The initial configuration can be generic, or selected by the AI machine 201 according to the received DGO problem.

At step 403, the AI machine 201 uses the initial configuration and initial metadata to define an updated configuration of the DGO algorithm. Typically, this involves solving an overarching optimisation problem based on an input optimisation problem, the initial configuration and the initial metadata. Alternatively or additionally the AI machine 201 defines the updated configuration by making decisions based on its training.

In some instances the input optimisation problem is the same as the DGO problem. In other instances, the AI machine 201 modifies the DGO problem to define the input optimisation problem, or splits up the DGO problem into a set of smaller problems and bases the input optimisation problem on one of these smaller problems. In this last instance, it may be necessary to process or solve input optimisation problems based on some or all of the smaller problems in order to solve the DGO problem.

An objective of the AI machine 201 is to optimise the performance of the DGO engine 203, that is to generate an updated configuration for the DGO algorithm that progresses towards solving the input optimisation problem in the shortest possible time, subject to constraints on the cost and availability of computational resources, e.g., the number, performance and availability of the processing units of the DGO engine 203.

At step 404 the AI machine 201 outputs the updated configuration to the DGO engine 203. The updated configuration comprises tasks to be performed by the processing units of the DGO engine 203. The tasks are each a set of instructions to be carried out by the processing units. The tasks relate to a variety of different aspects of the DGO algorithm. They primarily involve applying a DGO method to a function derived from the input optimisation problem.

In this context, the DGO methods are mathematical methods that are applied to the functions and variables. The DGO methods are retrieved from the DGO method database 207 by the AI machine 201. The AI machine 201 also generates DGO methods, for example by modifying a DGO method retrieved from the DGO method database 207. These generated DGO methods are stored in the DGO method database 207 for future use.

Each function typically includes a set of variables. The AI machine 201 derives the functions from the input optimisation problem by splitting the input optimisation problem up, for example by decomposing or transforming the input optimisation problem.

Different tasks are allocated to different processing units, according to the updated configuration of the DGO algorithm. In a simple example, one task is allocated to each processing unit. However, this is not always the case, and depending upon the complexity of a task, the task may be split between multiple processing units or multiple tasks may be allocated to a single processing unit. It is therefore convenient to consider the processing allocated to each processing unit to be an operation, each operation being a whole task, a part of a task or multiple tasks.

At step 405, the DGO engine 203 receives the updated configuration of the DGO algorithm from the AI machine 201 and, at step 406, performs the processing required by the updated configuration of the DGO algorithm. This involves each processing unit of the DGO engine 203 processing the operation(s) allocated to it.

At step 407, the DGO engine 203 sends outputs of the operations processed by the processing units to the AI machine 201, along with metadata based on the processing of the updated configuration of the DGO algorithm.

The DGO engine 203 determines at step 408 whether or not the DGO problem is solved. If the DGO problem is solved, the DGO engine 203 terminates at step 412. If the DGO problem is not solved, the DGO engine 203 checks, at step 409, whether a new updated configuration for the DGO algorithm is available.

In order to determine that DGO problem has been solved, the DGO engine 203 determines whether or not the DGO algorithm has arrived at a global solution to the DGO problem, e.g., a solution which produces the optimal value of the objective function across the entire domain of the DGO problem. As the DGO algorithm progresses, many local solutions of the DGO problem are usually located, but only one of them will be a global solution. Each time a local solution is found, it is assessed to see whether it is a global solution. In the present embodiments, the local solution is assessed to see whether it is a global solution within a user-defined tolerance. The computing time expended proving whether a solution is a global solution may be large, and typically much greater than the computing time expended generating the solution itself.

A global solution is a set of values for the variables of the DGO problem for which a function acquires the optimal value across the entire domain of the original DGO problem, whilst satisfying all the constraints of the DGO problem. Therefore, even if a global solution has been located, unless the DO algorithm has proof of global optimality (e.g. proof that the solution is indeed a global solution rather than one of the many local solutions) it would keep searching forever for another, better solution. It is mathematically impossible to know whether a better solution exists or not unless proof of global optimality is provided as well. The DGO algorithm provides such proof.

In particular, the DGO algorithm provides proof of global optimality using a convergence criterion. Assuming the input problem is a minimisation problem, the convergence criterion for the DGO algorithm solving that problem is that the difference between the Best Upper Bound (BUB) and the Lowest Lower Bound (LLB) is less than, or equal to, a user-defined tolerance ε, that is BUB - LLB ≤ ε. Because the BUB is the value of the function at a local solution of the original DGO problem, a BUB solution which satisfies the convergence criterion is the guaranteed global solution of the original problem within the user-defined tolerance ε.

The AI machine 201 receives the outputs and the metadata from the DGO engine 203, at step 410. At step 411, the AI machine 201 updates itself using the outputs and the metadata and, returning to step 403, generates a new updated configuration for the DGO algorithm.

In some embodiments, the AI machine 201 only generates a new updated configuration of the DGO algorithm when the outputs indicate that the existing updated configuration of the DGO algorithm is complete. Completion of the existing updated configuration of the DGO algorithm may involve processing the operations of the existing updated configuration of the DGO algorithm several times. In other words, the DGO algorithm remains static for a number of iterations. In these embodiments, when the DGO engine 203 identifies, at step 409, that no new updated configuration of the DGO algorithm has been generated by the AI machine 201, it proceeds at step 406 to perform the processing based on the existing updated configuration of the DGO algorithm again.

In other embodiments, the AI machine 201 generates a new updated configuration of the DGO algorithm more frequently, e.g. whenever it receives an output of an operation or the outputs of a number of operations of the existing updated configuration of the DGO algorithm, and/or the associated metadata. In these embodiments, the DGO algorithm can be considered to be dynamic. Whenever the DGO engine 203 identifies at step 409 that a new updated configuration of the DGO algorithm is available, it goes on to perform its processing, at step 406, using the most recent updated configuration of the DGO algorithm.

The method continues in this way until it is determined, at step 408, that the DGO problem has been solved. At this point, the method finishes with the DGO engine 203 terminating at step 412.

### DGO Algorithm

Each updated configuration of the DGO algorithm is generated by the AI machine 201 taking two broad steps. The first step is to select one or more DGO methods to apply to the input optimisation problem. Each selected DGO method, along with any function based on the input optimisation problem to which the DGO method is applied, forms a task of the updated configuration of the DGO algorithm. The second step is to decide how the tasks are to be processed by the DGO engine 203.

The AI machine 201 is trained to predict how well different DGO methods will perform. The prediction typically takes account of the mathematical structure of the input optimisation problem and the mathematical structure of any functions based on the input optimisation problem to which the DGO methods are to be applied. The AI machine 201 also takes account of the metadata stored in the miscellaneous database 208 and received from the DGO engine 203, as well as the results of tasks of previous updated configurations of the DGO algorithm processed by the DGO engine 203.

When allocating the tasks to the processing units of the DGO engine 203, the AI machine 201 aims to optimise use of the processing units, for example by balancing computational load between the processing units. The AI machine 201 also takes account of the capabilities of the different processing units of the DGO engine 203.

### Communication

The AI machine 201 works with the DGO engine 203 to implement the DGO algorithm. In order to allow the AI machine 201 and the DGO engine 203 to work together effectively, the method incorporates a uniform communication structure.

A communication protocol is provided via which data can be sent between the AI machine 201 and the DGO engine 203. The communication protocol incorporates a data format that defines the DGO methods consistently. The data format also defines the DGO problem and the input optimisation problem and functions derived from the DGO problem consistently. In particular, the data format makes it possible to compare mathematical structures, for example function to function or entire optimisation problem to entire optimisation problem.

### Tasks

Some of the DGO methods are performed directly on the input optimisation problem or on functions derived from the input optimisation problem. DGO methods performed on the input optimisation problem or on functions derived from it include the following methods.
- Selecting a node of a branch-and-bound tree.
- Generating new nodes in a branch-and-bound tree.
- Performing bounds tightening, e.g. upper bounds tightening, lower bounds tightening or both.
- Generating relaxations, e.g. convex, non-convex or linear relaxations.
- Generating an underestimator (e.g. a new function that is always less or equal to the original function) Performing zero or higher order interval arithmetic, extended interval arithmetic, generalized interval arithmetic, Taylor-based arithmetic, interval slopes, affine arithmetic, ellipsoid calculus, elliptical arithmetic or quadratic inclusion function calculations.
- Evaluating functions, parts of functions, derivatives of functions and parts of those derivatives

Other DGO methods are not performed directly on the input optimisation problem or on functions based on the input optimisation problem. Instead they relate more broadly to how the DGO algorithm functions as a whole. These DGO methods include the following.
- Optimisation algorithms using the metadata.
- Generating metadata. The DGO methods can be performed sequentially or in parallel by the DGO engine 203. One advantage of this is that any number of nodes can be generated, and different DGO methods can be applied to different, or the same, nodes at the same time.

For example, one configuration of the DGO algorithm may include tasks involving bounds tightening, other tasks involving generating relaxations and yet other tasks involving solving relaxations. The operations processed by a single processing unit may relate to a multiplicity of these different tasks, such as tightening the bounds of a first node, solving the relaxation of a second node, generating a relaxation of the first node and tightening the bounds of a third node.

In another example, any number of different DGO methods may be applied to the same node in parallel, and the results of the different tasks compared to establish which DGO method worked best. For example, three different DGO methods may be used to generate relaxations at a given node, and a decision is then taken on which relaxation is the best. Similarly, it is possible to perform three different bounds tightening procedures, or solve the upper or lower bounding problem using five different methods, for a given node, and then decide which procedure or solving method is the best.

### Metadata

The AI machine 201 generates the updated configurations of the DGO algorithm using metadata. The metadata is stored in the miscellaneous database 208. It is also provided to the AI machine 201 by the DGO engine 203 during or after processing of the operations of the updated configurations of the DGO algorithm.

The metadata includes information representing a measure of the effectiveness of the DGO methods applied to the different functions. The appropriate measure varies according to the DGO method used. By way of example, the metadata may include:
- Separation distance between relaxations or parts of relaxations in results of a relaxation method
- Tightness of a bound produced by a relaxation method, e.g. as determined after solving the lower bounding problem.
- Bounds resulting from a bounds tightening method, in comparison to the original bounds before each bounds tightening method was performed
- Percentage of tightening for a variable achieved by a bounds tightening method
- Aggregate percentage tightening of all variables of a function achieved by a bounds tightening method
- Whether or not the results of a task for a node can be cached and re-used in child nodes of the node, or even further into the future branches of the branch-and-bound tree.
- Rate of growth of the branch-and-bound tree, e.g. the rate at which the number of nodes increases per iteration, using a node selection method
- AA measure of how well a DGO method performs when combined with other DGO methods. This means that, even though a DGO method or a combination of DGO methods may be perform less well than other DGO methods or combinations of DGO methods when used by itself/themselves, it may be that the DGO method synergises well with other DGO methods.

### Objective of the AI machine

The objective of the AI machine 201 is to minimise the time required to solve the input optimisation problem. Typically, the AI machine 201 achieves this while also satisfying any constraints, such as on the availability of the processing units of the DGO engine 203 or the AI engine 311, to achieve a balance between time and cost of resources.

The decision making of the AI machine 201 can be illustrated, by way of example, in relation to some specific DGO methods.

### 1. Relaxations

The generation of a relaxation involves combining certain building blocks. These building blocks include, but are not limited to:
- Generation of new functions (or constraints) through functional transformations or algorithmic procedures
- Identification of mathematical properties of functions (including convexity properties)
- Substitution of parts of functions with other functions
- Adding functions to other functions
- Applying mathematical operations between existing functions, and/or between existing functions and other functions
- Applying mathematical function composition (e.g. given functions f(x) and g(x), apply f(g(x))
- Addition of new constraints to the bounding problem

The DGO method database 207 contains a plurality of relaxation methods. Metadata associated with generating and using each of the relaxation methods is stored in the miscellaneous database 208.

The AI machine 201 determines the best relaxation method, or combinations of relaxation methods, to use in order to satisfy its objectives. This determination includes, but is not limited to:
- Deciding which relaxation method to use for the entire input optimisation problem, and/or for each function individually.
- Splitting each function or sets of the functions into components, and deciding which combination or combinations of relaxation methods to use for each individual component.
- Generating hybrid relaxations, by combining relaxation methods in the DGO method database 207 to relax individual components of the input optimisation problem.
- Adding the hybrid relaxations as well as any metadata associated with the generation, and usage, of the hybrid relaxations as a new relaxation method to the DGO method database 207. This relaxation method is subsequently treated equivalently to any pre-existing relaxation method in the DGO method database 207.
- When a relaxation method can generate relaxations for individual variables, the AI machine 201 is also used to determine which of these variables are to be relaxed.

The determination can be adjusted dynamically by the AI machine 201. The AI machine 201 can also decide how to implement the relaxation methods as other aspects of the DGO algorithm are being processed.

### 2. Bounds tightening

The AI machine 201 generates new bounds tightening methods. The AI machine 201 initially uses rules defined by the metadata to generate bounds tightening methods for any individual component of the input optimisation problem or a function based on the input optimisations problem. The AI machine 201 also trains itself to discover new bounds tightening methods, based on the results of tasks involving bounds tightening methods and the associated metadata, including:
- Effectiveness of the bounds tightening method, e.g. how much the bounds were tightened.
- Use of computational resources.
- Separation distance as a result of the bounds tightening method
- Mathematical structure of the input optimisation problem or function

Any new bounds tightening method that the AI machine 201 considers likely to be successful is added to the DGO method database 207. Whilst the AI machine 201 is running the DGO Algorithm in respect of any given input optimisation problem, it also makes the following decisions for every new node:
- Which bounds tightening method to use, and how many times to use it
- Which variables to use the bounds tightening method on, and in what order
- How to generate new constraints that can be used to make either bounds tightening possible (e.g. in the case of unconstrained problems, because in order to perform bounds tightening constraints are needed) or more effective.

### 3. Load balancing

The AI machine 201 is provided with the following information by the DGO engine 203:
- A list of the processing units that the DGO engine 203 has available
- Detailed information about the processing units, including:
   ∘ Technical (hardware) specifications
   ∘ Communication latency
   ∘ Communication bandwidth (worst-case, average-case, and maximum/best-case)
   ∘ Failure rate statistics
   ∘ Ease of acquiring the processing unit (e.g. wait times, initial overhead etc.) ∘ Cost of using each processing unit individually
   ∘ Cost of using any combination of processing units (if it differs from the sum of costs of the individual processing unit)
   ∘ How the cost of using each processing unit (or set of processing units) changes as a function of time.
   ∘ The topology (or possible topologies, depending on which processing units are eventually acquired) of the network through which these processing units are connected/linked
- The user's preferences/constraints on performance, cost of resources, and accuracy (if no preferences are specified, default preferences are used)

The AI machine 201 is then free to decide the following, such that it can best achieve its objective:
- Which tasks to generate
- When, and in what order, to generate the tasks
- How the operations for processing the tasks should be spatially and temporally distributed across the available processing units (e.g. which processing unit should process which operation, how many of them, when, and in what order)
- The subset or subsets of the available processing units it should use at any given time

These decisions are made, and can be changed dynamically as the DGO algorithm progresses.

### 4. Parallel branching schemes

The AI machine 201 decides how to grow a branch-and-bound tree in a parallel environment. This depends on the following decisions, at any given time:
- What node selection strategy is used, e.g.
   ∘ Which node(s) to select
   ∘ How many nodes to select
- What variable selection strategy to use, e.g.
   ∘ How many variables to branch on, and which ones
- The location in the range of each variable where branching should occur
- The number of regions that each variable should be partitioned into
- Which nodes should be processed in what processing units, how many nodes, and in what order

These decisions can change dynamically as the AI machine 201 collects data on the impact of its decisions.

### 5. Reformulation

The AI machine 201 determines one or both of the following:
- The best formulation of the DGO problem (e.g. an engineering/mathematical problem) to use as the input optimisation problem, e.g. given an abstract description of the phenomenon that is being modelled, the AI machine 201 determines an input optimisation problem which:
   ∘ Describes the phenomenon, and
   ∘ Is most likely to be easy to solve
- The best reformulation of an input optimisation problem. If the input optimisation problem is generated by the AI machine 201, the AI machine 201 also performs further reformulation. The AI machine 201 reformulates the problem dynamically, throughout the solution process.

### AI Training

The AI machine 201 can be trained either offline or online. In offline training, the AI machine 201 is trained using pre-generated data, some or all of which has been generated by the AI machine 201 itself. In online training, the AI machine 201 is training while an input optimisation problem is being solved.

Offline training, using pre-generated data, can use the following inputs: the mathematical structure of each input optimisation problem, mathematical reformulations of the input optimisation problems, alternative optimisation models used to describe the same problem and detailed data on how each problem was solved as well as the performance metrics (e.g. all available metadata). The AI machine 201 is also provided with the following:
- A set of DGO problems
- Rules on which to base reformulation of the DGO problems into input optimisation problems
- Initial configurations of the DGO algorithm
- Metadata about the initial configurations
- The DGO methods stored in the DGO method database 207

The online training process is similar to the offline training process, with the difference being that the AI machine 201 is not just making predictions on the structure of the DGO algorithm in advance, but it also uses the metadata generated by the DGO engine 203 in order to further train itself, and hence improve its predictive power. In both cases, training data is added to and stored in the miscellaneous database 208.

New training data can either be treated as equivalent to all other data in the miscellaneous database 208 or it can be assigned a different (higher or lower) weight while a input optimisation problem is being solved. This is advantageous, as the data generated from solving a current problem will be more relevant when predicting an effective algorithm to solve that problem.

### Example of AI Machine Decisions

Two examples are provided below to illustrate the method, and in particular the decisions made by the AI machine 201. The examples are simplifications of the real method, at least in that the numbers used are very small in comparison to real implementations and only a few selected steps are illustrated. However, the examples nonetheless provide some insight into the method.

### Example 1

The AI machine 201 first receives the following inputs and metadata:
- Functions defining a current node of a branch and bound tree for the input optimisation problem.
- Metadata indicating that a bounds tightening method 1 consumed 12 CPU seconds and tightened the bounds by an aggregate 12% on the current node.
- Metadata indicating that a bounds tightening method 2 consumed 6 CPU seconds and tightened bounds by an aggregate 2% on the current node.
- Metadata indicating that a bounds tightening method 3 consumed 24 CPU seconds and tightened bounds by an aggregate 15% on the current node.
- Metadata providing a history of all bounds tightening methods applied to the parent nodes of the current node of branch and bound tree.

Based on these inputs and metadata, the AI machine 201 may make any one of the following decisions:
- Use bounds tightening method 1 for the children of the current node, as it has the optimal CPU time and bounds tightening aggregate compared to other the other methods
- Use bounds tightening method 3 for the children of the current node because, based on the AI training
   ∘ it is a priority to tighten bounds as much as possible at this part of the branch and bound tree, or
   ∘ It is a priority to tighten bounds as much as possible nearly all the time for this type of problem
- Use bounds tightening method 2 for the children of the current node because it is the cheapest, in terms of CPU time consumed, and tightening the bounds at this part of the branch and bound tree is not a priority
- Not to perform any of the bounds tightening methods at this time because the AI machine 201 predicts that bounds tightening will not make any difference until further levels of the branch and bound tree are reached (using other methods)
- Use bounds tightening method 4 for the children of the current node because the AI machine 201 assesses that this method achieved results having better performance, e.g. CPU time consumed or bounds tightening aggregate, when used in applied to parent nodes of the current node
- Use bounds tightening method 3 because, even though it did not perform very well, e.g. as indicated by the CPU time consumed, on the current node, it has performed very well on parent nodes of the current node; and to use method 1 for subsequent child nodes of the child nodes of the current node, as the AI machine 201 predicts that bounds tightening method 1 will perform well for those nodes.

### Example 2

The AI machine 201 received an input optimisation problem at a root node, and makes some initial decisions on how to start solving it. Based on the input, as well as its previous training, the AI machine 201 might make the following decisions:
- The AI 201 predicts with high certainty that the following combination of DGO methods will work well:
   ∘ Bounds tightening method 1 for some nodes and method 3 for others
   ∘ A hybrid of relaxation methods 2, 5, 12
   ∘ A classic bisection scheme for the generation of new nodes
   ∘ Solver SNOPT for solving convex non-linear optimisation problems, and CPLEX for solving linear optimisation problems
   ∘ Node selection strategy 4: "maximum separation distance"
   The AI machine 201 then generates tasks embodying each of these methods and makes predictions on how long each of the tasks needs to run on the processing units that are available. The AI machine 201 then distributes the tasks as operations to be performed by the processing units, taking account of the order in which the tasks should be performed, such that the overall computation time is minimised.
- If the input optimisation problem is quite different than those the AI machine 201 has seen before, it might decide to generate 10 different configurations of the DGO algorithms and gather metadata on the efficiency of various individual DGO methods, as well as the efficiency of combining different DGO methods. An example of how it would determine the best combination of bounds tightening and relaxation methods follows:
   ∘ Bounds tightening method 1 is better than bounds tightening method 2, but the combination of bounds tightening method 2 + relaxation method 5 is better than any other combination of bounds tightening and relaxation methods. The AI machine 201 would then decide to use the combination which produces the best results.
   ∘ It is important to note here that this is a fuzzy decision: what the AI machine 201 actually decides to do is determined by two factors: (i) what it actually measured, and (ii) what its training predicts might be good overall. In this case, even though bounds tightening method 2 combined with relaxation method 5 is measured to be the best, the training of the AI machine 201 might suggest that this is very likely to eventually lead to rapid growth of the branch-and-bound tree, which is undesirable. Thus, it will decide to just use bounds tightening method 1 and some other relaxation method, because it predicts that it will be better overall.
   ∘ If the AI machine 201 is not confident enough in its predictions for this particular input, it will assign greater weight to the metadata. As it accumulates more and more metadata over the course of solving this particular problem, it becomes more and more confident in its predictions.

### Snapshots of method

The way the process is described here is mostly synchronous, e.g. the AI machine 201 balances the load such that each set of tasks processed by the DGO engine 203 complete at the same time. This aims to facilitate explanation, as an asynchronous procedure is much more convoluted.

**Nomenclature**

| | |
|---|---|
| BT1 | Bounds tightening using method 1 |
| GR1 | Generate relaxation using method 1 |
| S1 | Solve problem using local Solver 1 |
| NSH | Node selection heuristics |
| CNN | Create new nodes |
| UBH | Upper bound heuristic |
| SLB | Solve lower bounding problem |
| SUB | Solver upper bounding problem |
| AS | Run algorithm selection algorithms |
| NCS1 | Node creation strategy 1 |
| IAC | Interval arithmetic calculations |
| TAI | Train the AI |

When these abbreviations are used with a trailing number, it means that they are performed on the node of that index. E.g., BT1 1 means run BT method 1 on node 1, GR2 23 means generate relaxation for node 23 using method 2. Abbreviations without trailing numbers imply that this procedure does not take individual nodes as input. For example, ASH means run algorithm selection algorithms, which is a procedure which affects the entire problem.

### Snapshot 1

The AI machine 201 has just received the root node (node 0). It then tells each of its 3 processing units what to do.
• It generates 20 possible tasks
• It predicts how long each of those tasks would take on each processing unit, and determines that, in order to balance the load well, it should only run the following 11 tasks for now, distributed across the 3 processing units as follows:

| Processing Unit 1 | Processing Unit 2 | Processing Unit 3 |
|---|---|---|
| BT1 0 | BT2 0 | BT3 0 |
| GR1 0 | GR2 0 | GR3 0 |
| NSH | SLB GR2 S1 0 | SLB GR3 S2 0 |
| SUB S1 0 | CNN | |

After each step (row of the table above), or after a number of steps, each processing unit returns metadata to the AI machine 201 on how each task performed. In this case, this means:
- Effectiveness of each BT method (CPU time/measure of tightening)
- Effectiveness of each relaxation method (CPU time/resulting lower bound of objective function).
- The AI machine 201 also calculates the synergy between each pair of BT & relaxation method based on the above metadata.
- CPU time that each processing unit (processing units 1 and 2) required to solve each problem.
- Time required to generate new nodes, and to run the node generation heuristics Note that the AI machine 201 did not solve the problem for it generated using GR1. This is because it believes that this is not as likely to be good as the others, but if the results from GR2,3 are not good it has already performed all calculations necessary to run a "SLB GR1 0" task. However, the results it receives are good, so it decides not to run this task.

The AI machine 201 makes the following decisions for the next step:
- Use processing unit 1 for all upper and lower bounding problems
- Discard the "SLB GR1 0" task in its pipeline
- Experiment further with BT and GR
- Generate 4 new nodes, 3 of which are to be processed in the next step

### Snapshot 2

| Processing Unit 1 | Processing Unit 2 | Processing Unit 3 |
|---|---|---|
| BT1 1 | BT2 2 | BT3 3 |
| SUB 3 | SUB 2 | GR3 3 |
| GR1 1 | SUB 1 | SLB GR3 3 |
| SLB GR1 1 | GR2 2 | |
| CNN | SLB GR2 2 | |

In this snapshot there are 3 nodes and the calculations necessary for node processing are done in the proper order: BT, then GR, then SLB. SUB can be any time after BT.

There are two things of interest:
- The AI machine 201 has decided (output of the AS task in the previous step) to experiment with 3 different BT and GR methods, and
- It predicts that BT2 and GR2 will take less time than BT1,3 and GR1,3, so it balances the load between workers by sending SUB1,2 to worker 2. GR1 and BT1 will take slightly less than GR3 and BT3, so it squeezes SUB 3 and CNN in the task queue of worker 1.

The processing units do not finish these tasks concurrently because the AI machine 201 failed to predict the load properly. The AI machine 201 was receiving metadata as each task was completed, and is now aware of the following:
- It is difficult to find good UBs (all three SUB tasks failed to find a feasible solution)
- The load should be balanced better
- Additional CPU resources are needed
- BT1 and GR2 seem to work best for all nodes

### Snapshot 3

The AI machine 201 now acts on its conclusions from the previous step. It probes the DGO engine 203 to see whether it is allowed to acquire additional CPU resources, and acquires another processing unit, which it uses to run UBH. It uses BT1 and GR2 for the new nodes:

| Processing Unit 1 | Processing Unit 2 | Processing Unit 3 | Processing Unit 4 |
|---|---|---|---|
| BT1 4 | BT1 6 | NSH | AS |
| BT1 5 | CNN | SLB GR2 4 | UBH |
| GR2 4 | SLB GR2 6 | SLB GR2 5 | AS |
| GR2 5 | | | UBH |
| GR2 6 | | | UBH |

- Because the AI machine 201 received new metadata after snapshot 2, it was able to balance the load very well this time around, so that all processing units finish their tasks at the same time.
- The last two tasks of UBH in worker 4 were squeezed in by the AI machine 201 to take advantage of that processing unit's predicted downtime while the other workers were calculating other things. The AI machine 201 determined that, because there is dependence between the order in which certain tasks are performed, the best way to take advantage of processing unit 4 at this point in time was to try and calculate a better UB and wait for all the other dependent tasks to finish.
- Note that, because it is running dedicated UB heuristics (worker 4) the AI machine 201 decided not to run SUB tasks on individual nodes

### Snapshot 4

• The AI machine 201 now decides that it should run experiments on node 7, as its results on its parent, node 6, were not very promising. In the next iteration it will only process 2 nodes, despite having acquired an additional processing unit.
• In order to do so, the AI machine 201 runs NCS twice, in parallel, and creates two additional children for node 6 (nodes, 7a, 8a, 7b, 8b). Keep in mind that the CNN step in the previous snapshot already created a pair of children (nodes 7, 8).
• Because of its training, the AI machine 201 considers that it is very likely that the bad results in node 6 were due to using low-order interval calculations, so it tries more expensive methods for these calculations (worker 3)
• It also decides to acquire an additional processing unit if it can, in order to accommodate the extra calculation

| Processing Unit 1 | Processing Unit 2 | Processing Unit 3 | Processing Unit 4 | Processing Unit 5 |
|---|---|---|---|---|
| NCS1 6 | NCS2 6 | BT1 10 | AS | UBH |
| BT1 7a | BT3 7b | GR2 10 | AS | UBH |
| BT2 7b | BT3 7a | SLB GR2 10 | GR3 7 | UBH |
| BT3 7a | GR1 7a | IAC 7a | SLB GR3 7 | UBH |
| SLB GR1 7a | GR1 7b | IAC 7b | BT1 7b | UBH |
| GR2 9 | SLB GR1 7b | IAC 7 | BT1 9 | CNN |

• As before, the AI machine's 201 load balancing ensures that no worker experiences downtime
• These experiments have given the AI machine 201 the data it needs to be confident in how to proceed with branching in the branch of the branch-and-bound tree which begins at node 6
• It is now also confident that BT2 and GR1 work well in that branch
• It has also decided, based on the IAC metadata, that it should use Affine Arithmetic in parallel for 5 constraints, in that branch of the tree.

### Snapshot 5

| Processing Unit 1 | Processing Unit 2 | Processing Unit 3 | Processing Unit 4 |
|---|---|---|---|
| SLB GR2 9 | BT1 11 | AS | AS |
| SLB GR2 14 | BT1 14 | GR2 12 | NSH |
| BT2 16 | BT1 12 | GR2 14 | SLB GR2 12 |
| | BT1 8 | GR2 11 | TAI |

Having advanced quite far into the process, it is not realistic to keep a full set of BT, GR, and SLB for every node in the same snapshot (because the overall algorithm is not synchronous). Many new nodes have been generated, and the solver performs BT, GR, SLB as it sees fit. Here, it decided to drop one of the extra processing units, as the AI machine 201 does not need the extra CPU power right now.

Now that it has accumulated enough metadata, the AI machine 201 also decides to dedicate a small part of computational power to train itself (TAI in worker 4) and assimilate knowledge from this new and challenging problem.

### Dependence of tasks

As discussed, some of the tasks are order-dependent. The way this is addressed in the parallel environment is that the AI machine 201 predicts how long each task is likely to take, and then distributes them properly over multiple processing units, such that, when e.g. GR needs to be run for node 3, BT has already been completed for node 3 somewhere else, and these results are available.

If this prediction fails, and the processing unit wants to begin GR 3 but BT 3 has not yet finished, the AI machine 201 postpones this task and goes to the next available one. If none of the tasks in its queue can be executed because of order/dependency issues, the DGO engine 203 queries the AI machine 201 for a new task to do. In an updated configuration of the DGO algorithm, the AI machine 201 then assigns new tasks to this processing unit, and re-evaluates its load balancing strategy so that this dependency issue does not happen again.

### Industry Examples

Solving DGO problems is important in a variety of contexts, and the disclosed method and apparatus is generally applicable to any such context. The method and apparatus make solutions to many DGO problems possible, which would in practice be impossible to solve using conventional methods. Some examples of the fields of endeavour in which solving DGO problems can be useful are the financial industry and the oil and gas industry.

### Financial Industry

Financial institutions such as asset managers or hedge funds manage up to hundreds or thousands of investment portfolios depending on their size. In order to decide how best to diversify a given portfolio of assets, quantitative analysts typically employ techniques from modern portfolio theory, part of which involves creating a mathematical optimisation model to represent the risk and expected return.

An institutional investor would normally consider an allocation or diversification of stocks that is a trade-off between risk return but with some additional requirements on the construction of the portfolio (usually to meet some regulatory requirements). These additional requirements-can include constraints such as: limits on the number of unique assets in the portfolio; how closely the makeups of the portfolio assets are from a benchmark index; and the ability to tightly control their exposure to risk.

The additional portfolio constraints translate to significantly more complex optimisation models that can render the underlying mathematical problem non-convex. As is well known, general non-convex problems cannot be solved to guaranteed global optimality by current methods. The decision variables in this example would be the stock weights which quantify the proportion of each asset that is to be invested for a given portfolio. Using the method disclosed herein, this extended, non-convex optimisation problem can be solved to find the globally optimal weighted distribution of stocks that simultaneously minimises their exposure to risk and maximises their return.

Input data (sometimes known as parameters) can include: the alpha scores of the stocks, which represent a measure of a stock's performance regarding potential future returns; the beta scores of the stocks, which represents a measure of the stock's volatility or system risk relative to the equity market as a whole; the benchmark weights of the stocks which is a ratio of a stock's total market capitalisation to the total market capitalisation of the benchmark index; and finally the stock demographics, e.g. the sector and geographical market to which the stocks belong.

### Oil & Gas Industry

Oil and gas plants/refineries are dedicated to converting natural gas to liquid products that are normally synthesised from crude oil. There is a motivation to create plant designs which minimise capital investment, while maintaining a high throughput at excellent energy and carbon efficiencies.

When designing the gas-to-liquid process, engineers at these oil and gas companies create an optimisation model which describes the balance of opposing demands that are required for a sustainable performance of the plant. In general, one would want to maximize liquid output while minimising CO2 emission and irreversible energy losses.

This design task is a very complex one and involves a wide range of decision variables such as the selection of feeds and products, the type of synthesis reactor technology, the structural connectivity of the plant units and the energy integration within the system. Furthermore, the optimisation takes place under various constraints, such as the available monetary and physical resources, as well as the limits on the equipment and knowledge. Typical input data can include: the available carbon, hydrogen and energy resources; the safe up-time of certain refinery units; and the production rates for various units. Mixed-integer non-convex problems of this nature are known to be unsolvable to global optimality using current technology. Using the method disclosed herein, this mixed-integer, non-convex optimisation problem can be solved to find the globally optimal weighted distribution of stocks that simultaneously minimises their exposure to risk and maximises their return.

### Alternatives and modifications

Various other modifications will be apparent to those skilled in the art.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. A computer implemented method for solving a Deterministic Global Optimisation, DGO, problem, the method comprising:
defining an input optimisation problem based on the DGO problem;
performing a routine comprising:
generating an updated configuration of an algorithm for solving the input optimisation problem, the updated configuration comprising a plurality of tasks and the generation of the updated configuration being based on metadata;
distributing the plurality of tasks of the updated configuration to different processing units for processing, the distribution being based on the updated configuration;
receiving results of the processing of the plurality of tasks from the different processing units; and
receiving metadata representing information about the processing of the plurality of tasks by the different processing units; and
until it is proven that a global solution to the DGO problem has been found within a user-defined tolerance, updating the metadata using the received metadata and repeating the routine.

2. A computer implemented method according to claim 1, wherein the metadata includes information derived from previously performing the method to solve a different DGO problem or a different input optimisation problem based on the same DGO problem.

3. A computer implemented method according to claim 1 or claim 2, wherein the generating and/or the distributing use a machine learning algorithm.

4. A computer implemented method according to any one of the preceding claims, wherein generating the updated configuration of the algorithm when the routine is repeated is also based on the results.

5. A computer implemented method according to any one of the preceding claims, wherein the received metadata relates to at least one of: the cost of processing each task and the quality of each result.

6. A computer implemented method according to claim 5, wherein the metadata relating to the cost of processing each task is: a) indicative of a length of time between sending the task to the processing unit and receiving the result from the processing unit and/or b) indicative of whether any aspect of the processing of the task is likely to be reuseable when processing another task.

7. A computer implemented method according to claim 5 or claim 6, wherein the quality data is: a) indicative of an amount by which a bound of a variable of the input problem is tightened, b) indicative of amounts by which bounds of a plurality of variables of the input problem are tightened, c) indicative of bounds on the values of a plurality of functions or optimisation problems.

8. A computer implemented method according to any one of the preceding claims, wherein generating the plurality of tasks comprises selecting one or more algorithms from a library of algorithms.

9. A computer implemented method according to any one of the preceding claims, wherein distributing the plurality of tasks among the different processing units for processing involves defining operations based on the tasks, which operations each perform: a single task, a plurality of the tasks or a part of one of the tasks.

10. A computer implemented method according to claim 9, wherein the distribution of the tasks between the processing units minimises the total time taken to process said plurality of tasks.

11. A computer implemented method according to claim 9, wherein the distribution of the tasks between the processing units minimises the cost of computational resources.

12. A computer implemented method according to any one of the preceding claims, comprising storing at least one of the plurality of tasks and wherein generating the updated configuration of the algorithm when the routine is repeated makes use of the stored task(s).

13. A computer implemented method according to any one of the preceding claims, wherein the DGO problem is a large-scale DGO problem.

14. A computer program comprising instructions for performing the method according to any one of claims 1 to 13.

15. An apparatus for solving a Deterministic Global Optimisation, DGO, problem, the apparatus comprising a computer processing means arranged to:
define an input optimisation problem based on the DGO problem;
perform a routine comprising:
generating an updated configuration of an algorithm for solving the input optimisation problem, the updated configuration comprising a plurality of tasks and the generation of the updated configuration being based on metadata;
distributing the plurality of tasks of the updated configuration to different processing units for processing, the distribution being based on the updated configuration;
receiving results of the processing of the plurality of tasks from the different processing units; and
receiving metadata representing information about the processing of the plurality of tasks by the different processing units; and
until it is proven that a global solution to the DGO problem has been found within a user-defined tolerance, updating the metadata using the received metadata and repeating the routine.
